# NEUE EUROPÄISCHE PATENTSCHRIFT

(11) **EP 1 078 672 B2**
(45) Veröffentlichungstag und Bekanntmachung des Hinweises auf die Entscheidung über den Einspruch: **24.11.2010**
(45) Hinweis auf die Patenterteilung: 25.04.2007
(21) Anmeldenummer: 00118544.6
(22) Anmeldetag: 25.08.2000
(51) Int. Cl.: B01D 25/164, B01D 25/21, B01D 25/28

(54) **Filterpresse mit Membranfilterelement**
Filter press with membrane filter elements
Filtre-presse avec plaques de filtration à membrane

(30) Priorität: 27.08.1999 DE 29914995 U
(43) Veröffentlichungstag der Anmeldung: 28.02.2001
(73) Patentinhaber: Mayer, Ludwig, 88319 Aitrach (DE)
(72) Erfinder: Mayer, Ludwig, Dipl.-Ing., 88319 Aitrach (DE)
(74) Vertreter: Pfister, Helmut

(56) Entgegenhaltungen:
- EP-B- 0 155 458
- DE-A- 2 933 034
- DE-C- 3 507 063
- US-A- 4 435 288
- US-A- 4 608 164
- US-A- 4 997 560

## Beschreibung

Die Erfindung betrifft ein Membranfilterelement bestehend aus einem Membranträger mit Zulauf, wenigstens einer daran angeordneten Membran,die mit einem Filter zusammenwirkt, wobei mindestens auf der dem Membranträger abgewandten Seite der Membran, Noppen und Stege vorgesehen sind, an welchen eine Flüssigkeit ablaufen kann, wobei die Flüssigkeit über Leitungen im Membranträger und Kanäle abgeführt wird und die Stege im Randbereich mindestens teilweise in Fließrichtung oder sternförmig angeordnet sind.

Für das Separieren, Filtrieren oder Auspressen von Flüssigkeiten, z. B. aus Klärschlämmen, aber auch für die Trocknung von Rückständen, Lebensmitteln bzw. in der pharmazeutischen Industrie ist der Einsatz von Filterpressen bekannt. Bei Filterpressen werden in einer sequentiell hintereinander angeordeten Reihe von Membranelementen das zu filternde Medium (die Trübe) zum Beispiel zentral oder im Eckbereich eingeleitet. Die Trübe wird in dem Filter in den Filterkuchen und die auslaufende Flüssigkeit, dem Filtrat aufgeteilt, wobei gegen die einströmende Trübe ein Gegendruck aufgebaut werden kann (wobei der Trübefluß abriegelbar ist). Das Ausdrücken erfolgt nach bekannter Weise durch Zusammenschieben der Membranfilterelemente bzw. Bewegung der Membran gegen den Filter, wodurch die Filterkammer verkleinert wird. Die Filterpresse wird hernach geöffnet, um den Filterkuchen nach unten entfallend zu entnehmen.

Aus der deutschen Patentschrift 38 42 662 ist eine Membranfilterplattenanordnung für eine Filterpresse bekannt. Bei dieser Anordnung wird auf den Membranträger die Membran als separates Element durch einen Dichtrandrahmen befestigt. Wesentlich dabei ist, daß die Höhe der Noppen der Höhe des Dichtrandrahmens entspricht. Nachteilig hierbei ist der getrennte Aufbau von Dichtrandrahmen und Membran, weil dieser herstellungstechnisch aufwendig ist. Des Weiteren birgt diese Ausgestaltung den Nachteil, das, aufgrund der gewählten geometrischen Anordnung, in ein solches Membranfilterelment nicht so viel Trübe ladbar ist.

Aus der europäischen Patentschrift 081 715 ist ebenfalls eine Membranfilterplatte bekannt. Das Wesentliche bei dieser Ausgestaltung einer Membranfilterplatte ist, daß für die Filtrations- beziehungsweise Abpressphase zwei unterschiedliche Sollbiegelinien vorhanden sind. Diese ordnen sich am Dichtrandrahmen in einem gewissen Abstand zueinander an und bergen daher die Gefahr, daß, aufgrund der Walgbewegung, an den beiden hintereinander angeordneten Sollbiegelinien Scherkräfte unterschiedlicher Richtung angreifen, die zu einem erhöhten Verschleiß der Membran gerade in diesem Bereich führen kann.

Aus der DE-OS 41 19 166 ist ein Membranfilterelement bekannt, dessen Gummimembran Stege aufweist, die im wesentlichen konzentrisch zum Einlauf für das Filtermedium angeordnet sind. Um der Gummimembran eine ausreichende Festigkeit zu geben, ist sie im Randbereich zunehmend dicker. Zur Mitte hin ist sie mit einem Gewebe verstärkt, um die Belastbarkeit der Gummimembran zu erhöhen. Im Randbereich sind die Stege querverlaufend bzw. parallel zum Rand ausgerichtet.

Durch die Anordnung der konzentrischen Stege beziehungsweise der Stege parallel zum Rand ist ein guter Einlauf des Filtrats behindert, da es sich zuerst hinter diesen Stegen ansammelt und es zu einem Stau kommt. Genauso verhält es sich bei Ablauf.

Aus der US-PS 4,435,288 ist ein Membranfilterelement bekannt, das Stege aufweist, die das Filtertuch tragen. Diese Stege sind senkrecht zum Randbereich und somit im wesentlichen radial zum Zulauf angeordnet. In den Spalten zwischen den Stegen fließt das Filtrat zu dem Ablauf hin ab.

Es ist Aufgabe der Erfindung ein Membranfilterelement, wie eingangs beschrieben, dahingehend zu verbessern, daß das Filtrat leicht und schnell ablaufen kann.

Diese Aufgabe wird auch einen Gegenstand nach Anspruch 1 gelöst.

Durch die erfindungsgemäße Ausgestaltung wird erreicht, daß der Fluß des Filtrates durch die Anordnung der Stege im Randbereich nicht behindert wird. Als Randbereich ist hierbei zum einen der Bereich um den Trübeeinlauf anzusehen, genauso wie der Randbereich der im Bereich des Filtratabflusses am äußeren Rand der Membran besteht. In diesen Bereichen ist die Membran auch mit dem Membranträger verklebt, verschweißt oder sonstwie verbunden. Neben einer möglichst ungehinderten Fließbewegung des Filtrates erleichtert die Anordnung der Noppen in Fließrichtung auch die Beweglichkeit der Membran. Zwischen Membran und Membranträger befindet sich ein Hohlraum, der gegebenenfalls mit Druck beaufschlagbar ist. Die Membran ist flexibel und beweglich und kann entsprechend den Druckverhältnissen zurückweichen oder gegen den Filterkuchen gepresst werden, insbesondere um den Filtratausfluß zu steigern. Beim bekannten Stand der Technik wird durch die konzentrische Anordnung der Stege, bezüglich dieser sphärischen Bewegung, eine zusätzliche Steifheit aufgeboten, die die Beweglichkeit einschränkt.

Die erfindungsgemäße Anordnung erleichtert aber auch die Bewegung der Membran gegenüber dem Membranträger, wodurch ein zusätzlicher Effekt erzielt wird. Dieser Effekt ist vergleichbar mit Ausgestaltungen einer Strebe bei einem Regenschirm, die ebenfalls eine sphärische Bewegung trotz der radial angeordneten Streben zuläßt.

Durch die erfindungsgemäße Ausgestaltung wird eine höhere sphärische Beweglichkeit der Membran erreicht, wodurch die Gefahr von Riss oder Bruch deutlich reduziert wird. Dies hat natürlich günstige Auswirkungen auf die Lebensdauer dieses Körpers.

Die Stege sind radial um den Zulauf angeordnet, so daß die Flüssigkeit bzw. das Filtrat möglichst schnell strahlenförmig verteilt wird. Im anschließenden Bereich der Membran sind Noppen mit im wesentlichen kreisförmigen Grundrissen vorgesehen, die ein schnelles Verteilen des Filtrats in alle Richtungen erlaubt.

Wie aus der Zeichnung zu erkennen ist, sind auch Noppen vorgesehen, deren Grundriss oval ausgebildet ist. Sie dienen zur versteifung der Membran. Am äußeren Umfang der Membran, im Befestigungsbereich mit dem Membranträger, sind die Stege ebenfalls radial zum Zulauf bzw. rechtwinklig zum Randbereich angeordnet. Auch hier dient die Anordnung der Stege dem besseren Abfluß des Filtrats zu Drainagerillen bzw. zu Abflußkanälen.

Bei großflächigen Membranen sind zusätzlich über die Membran verteilt Stütznocken vorgesehen, um die ebenfalls, wie um den Zulauf bzw. Ablauf, Stege vorgesehen sind. Die Stütznocken sind gerade bei größflächigen Membranen vorgesehen, um eine zu große Bewegung der Membran oder des Membranträgers zu vermeiden. Die Stütznocken weisen hierbei eine Höhe auf, die dem Befestigungsrand bzw. Befestigungsbereich der Membran am Membranträger entspricht. Im eingebauten Zustand liegt die Dachfläche an dem Membranträger an. Durch den radial Einsatz der Stege, wie beschrieben, auch bei den Stütznocken, wird auch hier eine entsprechende sphärische Bewegung der Membran erleichtert.

Auch auf der dem Membranträger zugewandten Seite der Membran sind in einer Ausführung der Erfindung ebenfalls, zumindest teilweise, in Fließrichtung orientierte Stege vorgesehen. Diese dienen zur Verstärkung und Unterstützung der Membran ohne die Beweglichkeit zu behindern.

Die Stege weisen eine veränderliche Höhe auf. Gerade im Ablaufbereich, wo also das Filtrat die Presse wieder verläßt, wird durch eine variable Höhe der Stege ein "Recheneffekt" erzielt. Zwischen den Stegen verbleibt ein Kanal, in welchem das Filtrat ablaufen kann. Die zum Rand hin zunehmende Höhe bewirkt, daß Schwebstoffe bzw. Filterkuchen nicht zu weit in Richtung des Ablaufes transportiert werden und so den Abfluß zu verstopfen droht. Durch entsprechende Anpassung der Steghöhe ist auch ein Anliegen der Membran am Membranträger steuerbar, das heißt der Anlagepunkt ist einstellbar. Gleichzeitig wird durch den erfindungsgemäßen Vorschlag im Randbereich ein großer Durchflußquerschnitt angeboten, der ca. doppelt so groß ist wie auf der übrigen Membran.

Vergleicht man insbesondere diese erfindungsgemäße Weiterentwicklung mit der Lösung der Patentschrift 38 42 662 des Standes der Technik, so zeigt die Erfindung eindrucksvoll, daß eine Verstopfung des Ausflusses durch die erfindungsgemäße Lösung zuverlässig vermieden wird. Gleichzeitig erlaubt die in Fließrichtung gewählte Anordnung der Stege einen schnellen Abfluß des Filtrats. Die gewählte Ausgestaltung ergänzt sich dabei vorteilhaft.

In einer bevorzugten Ausgestaltung der Erfindung ist vorgesehen, daß die Membran an ihrem Rand ein Randstück aufweist, und das Randstück Anlageflächen aufweist, an welchen es am Membranträger anliegt. Das Randstück ist zum Beispiel flanschartig ausgebildet und schließt die Membran an dem Membranträger an. Es ist vorgesehen, daß die Membran als eigenständiges Bauteil, getrennt von dem Membranträger, realisiert ist. Es ist aber auch möglich, daß die Membran mit dem Membranträger einstückig verbunden ist.

In einer bevorzugten Ausgestaltung der Erfindung ist vorgesehen, daß das Randstück einstückig mit der Membran ausgebildet ist. Durch eine solche Ausgestaltung ergibt sich ein erheblicher, herstellungstechnischer Vorteil, da in einem Arbeitsgang Randstück und Membran gefertigt werden und so bei der Herstellung Zeit gespart wird. Auf den Einsatz eines separaten Dichtrandrahmens wie im Stand der Technik, kann hierbei vollständig verzichtet werden.

In einer bevorzugten Ausgestaltung der Erfindung hat es sich ergeben, daß in unbelasteter Normalstellung der Membran die Oberfläche des Steges bezüglich der Anlagefläche in Richtung der Membran zurückgesetzt ist oder mit dieser Anlagefläche nicht fluchtet. Die Trübe wird in die Filterkammer eingefüllt, wobei die Filterkammer der Bereich in der Presse ist, welcher durch das Filtertuch von der Membran getrennt ist. Durch den vorgeschlagenen Anordnung wird die Anlagefläche des Filtertuches auf der Noppenoberfläche in Richtung auf die Membran versetzt, wodurch ein beachtlicher Kapazitätszuwachs erreichbar ist. Zwar mögen die konkreten Abmessungen dieses Versatzes gering sein, sie bieten jedoch gegenüber der Lösung aus dem Stand der Technik erhebliche Vorteile, da zu beachten ist, daß es um eine Volumenzunahme geht, die aus dem Produkt von Grundfläche und Höhe besteht. Die Grundfläche ist dabei die Querschnittsfläche der Membranfilterelemente, die Höhe ist dabei der Versatz der Oberfläche gegenüber der Anlagefläche. Des weiteren ist dabei zu beachten, daß in der Regel nicht ein oder zwei Membranfilterelemente hintereinander eingesetzt werden, sondern eine ganze Reihe von Membranfilterelementen sequenziell hintereinander angeordnet sind. Es ist also noch ein entsprechender Multiplikator bei der Anzahl der vorgesehenen Membranfilterelemente zu berücksichtigen.

Als Material für die Membran ist ein elastisches Material vorgesehen. Es eignen sich insbesondere Polypropylen, EPDM-Gummi, elastomere oder auch thermoplastische Werkstoffe.

Um die, durch die Bewegung entstehende, hohe Beanspruchung der Membran zu verringern, ist im Bereich zwischen der Befestigung der Membran mit dem Membranträger und den Stegen ein Gelenk vorgesehen. Das hierbei vorgesehene Gelenk dient dabei sowohl dazu, die Bewegung der Membran in Richtung auf den Membranträger zu, als auch hiervon weg zu ermöglichen. Auf die aufwendige Aufteilung dieser beiden Bewegungen in zwei verschiedene Sollbiegelinien, die entsprechend dem Stand der Technik wird hierbei bewußt verzichtet, da, wie bereits geschildert, die Lösung des Standes der Technik zum Auftreten von Scherkräften beziehungsweise zusätzlichen Reißkräften führen kann. Insbesondere ist die geometrische Auslegung der erfindungsgemäßen Filterkammer deutlich einfacher, da nur mit einem gelenkigen Punkt bei dieser Abwinklung der Membran zu konstruieren ist. Aufgrund der Qualität der verwendeten plastischen Werkstoffe ist auch die andauernde Umbiegung inzwischen kein Argument mehr für ein vorzeitiges verschleißen dieser Ausführung des Gelenkes. Insbesondere steht in diesem Bereich der geringe konstruktive Aufwand und die einfache Bewegung der Membran während der Filtrations- beziehungsweise Abpressphase im Vordergrund.

In einem weiteren Ausführungsbeispiel ist auf der gegenüberliegenden Stirnseite des Steges, also der dem Randstück abgewandten Seite des Steges ein weiteres Gelenk beziehungsweise Scharnier angeordnet. Hierdurch wird die Beweglichkeit der Membran in diesem Bereich noch erhöht. Das Gelenk wird dabei durch eine Schwächung der Materialdicke nach diesem Steg reduziert, das heißt, der Bereich der Schwächung ist der früheste Punkt für die Ausbildung des Scharniers. Je nach Auslegung der Filterkammer kann es aber auch zu keiner Ausbildung eines Scharniers kommen, die sich am Steg anschließende Membran mit Noppen wölbt sich mit großem Radius und kompensiert damit die Abwinkelung im Gelenk am Randstück. Insbesondere eignet sich bei dem verwendeten Material der Membran ein Filmscharnier.

Zur zusätzlichen Unterstützung ist die Membran in diesem Bereich mit Fasern verstärkt. Als Fasern eignen sich Nylon-, Glas-, Kunststoff- oder Kohlefasern. Diese können z. B. in Form eines Gewebes in das Material der Membran bei deren Herstellung eingebracht sein. Dabei ist vorgesehen, daß die Faserverstärkung insbesondere im Bereich des Gelenkes vorgesehen ist, wobei die Faserverstärkung den Steg zu durchdringen vermag und die beiden, vor und hinter dem Steg angeordneten gelenkigen Bereiche, das Gelenk und das Scharnier verstärkt.

Durch die Ausgestaltung der Stege und deren Anordnung legen sie sich bei einer Bewegung (rechtwinklig zur Membranfläche) leiterartig an das Filtertuch bzw. bei der Bewegung in andere Richtung an den Membranträger an. Leiterartig bedeutet hierbei, daß der Bereich der Stege derart ausgebildet ist, daß diese im Kammervolumen jeweils an nur zwei Punkten aufliegen und so eine Entlastung des Gelenkes bewirken, welches günstig für die Lebensdauer des Membranfilterelementes ist. Die Ausbildung des Steges ist hierbei so stabil oder steif gewählt, daß diese leiterartige Anlehnung erreicht wird, wobei der Steg selbst nicht verwunden oder gebogen wird. Durch diese Ausgestaltung wird das Gelenk, welches sich im Randbereich befindet und beide Biegerichungen erlaubt, entlastet. Das Kammervolumen ist dabei so ausgebildet, daß der Steg an seinen schmäleren Ende an der Wand des Kammervolumens anliegt und den ersten Auflagepunkt bildet. Der andere Auflagepunkt bildet das Gelenk am Randstück beziehungsweise Randbereich. In jedem Fall ist der Steg so stabil ausgebildet, daß er selber nicht verbogen wird.

Die Erfindung betrifft auch eine Filterpresse zum Auspressen bzw. Filtern von mit Feststoff versetzten Flüssigkeiten. Mindestens zwei benachbart angeordnete Membranfilterelemente, wie beschrieben, bilden dabei eine Filterkammer, in die das zu filternde Medium, die Trübe, über einen Zulauf eingebracht wird. Die Flüssigkeit wird mit Druck beaufschlagt, so daß sie durch ein Filtertuch gegen die Membran gedrückt wird, an deren Oberfläche das Filtrat zwischen den Noppen und Stegen hindurchfließt und über Rinnen und Kanäle abgeführt wird. Durch Beaufschlagen des Raumes zwischen Membranträger und Membran selbst wird die Membran zusätzlich gegen das Filtermedium gepresst, so daß ein noch höherer Druck entsteht. Es werden Drücke von 16 bis 60 bar erreicht. Die Erfindung ist in gleicher Weise bei einer Anordnung von einem Membranfilterelement mit einem Kammerelement (ohne Membran) einsetzbar.

Im folgenden wird an Hand der Zeichnungen die Erfindung näher beschrieben.

Es zeigen:
- Fig. 1: eine Filterpresse unter Verwendung von Membranfilterelementen gemäß der Erfindung im geschlossenem Zustand;
- Fig. 2: eine Filterpresse gemäß der Erfindung, nach Figur 1, im geöffnetem Zustand;
- Fig. 3: einen Ausschnitt der Oberfläche einer Membran des erfindungsgemäßen Membranfilterelements;
- Fig. 4: eine Seitenansicht des Membranträgers und einer Membran gemäß der Erfindung, einzeln;
- Fig. 5: einen Teilausschnitt der Verbindungsstelle zwischen Membranträger und Membran im Randbereich des Membranträgerelementes gemäß der Erfindung.

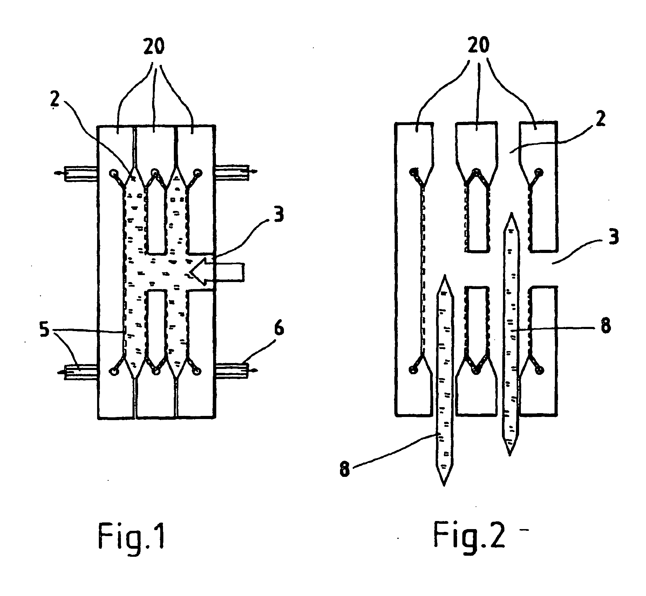

In Figur 1 ist schematisch eine Filterpresse im geschnittenen Zustand dargestellt, aus der ersichtlich ist, wie eine Filterpresse funktioniert. Mindestens zwei benachbart angeordnete Membranfilterelemente 20 bilden zwischen sich eine Filterkammer 2, in die über einen Zulauf 3 das zu filternde Medium, beispielsweise eine mit Schwebteilen versetzte Flüssigkeit, eingebracht wird. Durch Ausübung eines Drucks bis zu 25 bar wird die Trübe gleichmäßig in den Filterkammern verteilt.

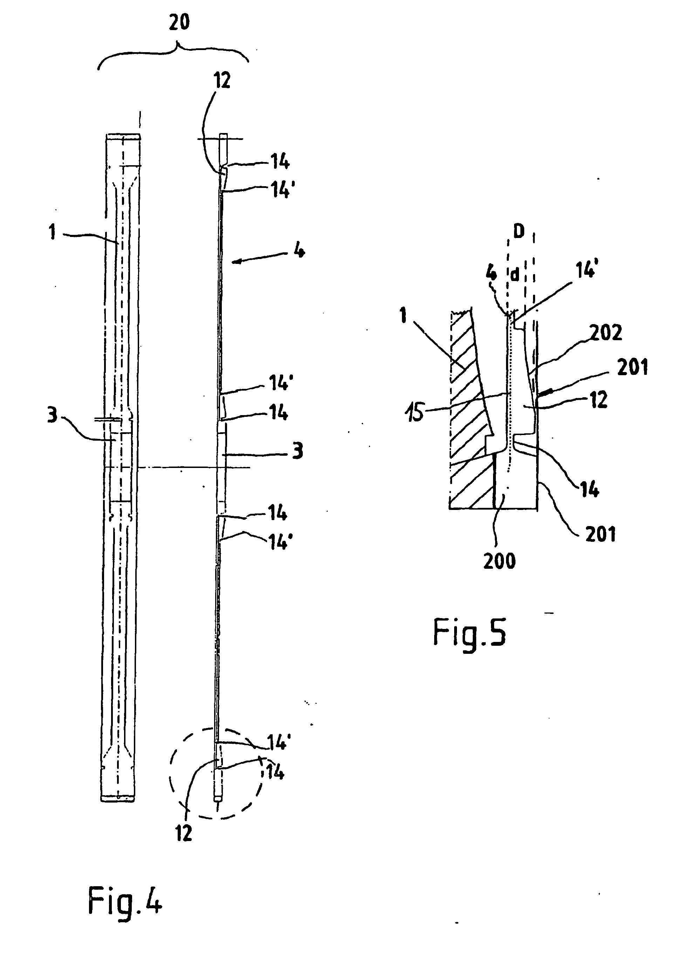

Die Membranfilterelemente 20 bestehen aus einem Membranträger 1 (siehe Figur 4), an dem zumindest eine Membran 4 angeordnet ist. Vorteilhafterweise sind beidseits des Membranträgers 1 Membranen4 vorgesehen, so daß die Filterpresse aus einer Anordnung von mehreren sequentiell hintereinander gereihten Membranfilterelementen 20 besteht. Die Membran 4 weist Noppen 11 und Stege 12 auf, zwischen denen das Filtrat 5 ablaufen kann. Das Filtrat 5 wird über Leitungen im Membranträger und Kanäle 6 abgeführt.

Das Filtrat 5 wird dadurch erhalten, daß das zu filtrierende Medium, die Trübe, mit Druck beaufschlagt und durch ein Filtertuch 7 hindurchgepresst wird. Zurück bleibt der Filterkuchen 8, der durch Öffnen der Filterkammer 2 entnommen wird.

Es ist jedoch auch möglich, den Filterkuchen 2 nach dem Filtervorgang zu waschen oder zu trocknen, um eventuelle Rückstände aus dem Filterkuchen 8 zurückzugewinnen oder auszuscheiden. Dies erfolgt bei geschlossener Filterpresse, wobei dann durch den Zulauf 3 eine reinigende Flüssigkeit hindurchgepresst wird.

Um ein noch besseres Filtrationsergebnis zu erzielen, wird der Bereich zwischen Membranträger 1 und Membran 4 mit Druck beaufschlagt, wodurch die Membran noch stärker gegen den Filterkuchen 8 gepresst wird. Es werden Drücke zwischen 16 und 60 bar erreicht.

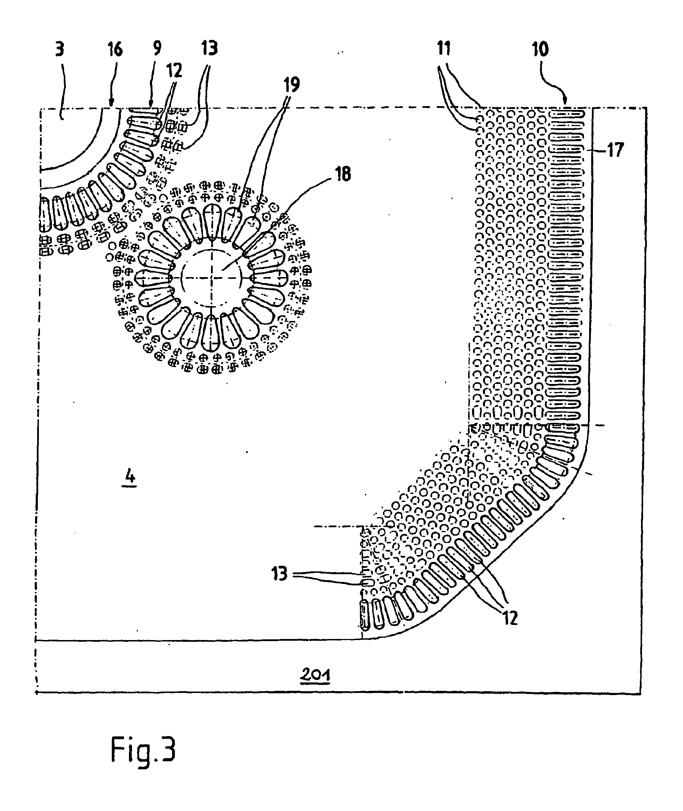

Von besonderer Bedeutung für die Erfindung ist die spezielle Ausgestaltung der Membran 4, wie in Figur 3 beschrieben. Über den Zulauf 3 wird das Filtermedium in die Filterkammer 2 eingebracht. Die Membran 4 ist in diesem Bereich 16 mit dem Membranträger 1 fest verbunden. Dies kann durch Ultraschallverschweißen, Verkleben, thermisches Verschweißen mit Heizspiegeln usw. erfolgen. Auch am Umfang 17 ist die Membran 4 mit dem Membranträger 1 fest verbunden. Es gibt im Stand der Technik Beispiele, die eine lösbare Verbindung zwischen Membranträger und Membran vorschlagen - diese werden von der vorliegenden Erfindung ebenfalls miteingeschlossen.

Wie aus Figur 3 zu entnehmen ist, ist die Oberfläche der Membran 4 mit Noppen 11, 13 und Stegen 12 versehen, die ermöglichen, daß hinter einem auf der Membran 4 aufliegenden Filtertuch 7 das Filtrat 5 zwischen Noppen 11, 13 und Stegen 12 abfließen kann. Rinnen und Kanäle 6, die hier nicht dargestellt sind, sammeln das Filtrat 5 und leiten es zu einem Sammelbecken weiter. Das Wesentliche der Erfindung liegt darin, daß die Stege 12 im wesentlichen in Fließrichtung des Filtrats 5 orientiert sind, wobei diese am Rand rechtwinklig zum Rand orientiert sind. Dies erleichtert das Abfließen der Flüssigkeit. Es sind keine Hindernisse vorhanden, vor welchen sich das Filtrat stauen könnte.

Die Noppen 11, die über die Fläche der Membran 4 verteilt sind, haben einen im wesentlichen kreisförmigen Grundriss, so daß sie ein Abfließen des Filtrats 5 in alle Richtungen gleichmäßig begünstigen. Oval geformte Noppen 13 dienen zur Versteifung der Membran 4 in konzentrischer Richtung.

Durch das Einbringen des Filtermediums unter Druck bzw. durch Druckbeaufschlagung des Raumes zwischen Membranträger 1 und Membran 4, bewegt sich die Membran 4 quer zu ihrer Erstreckungsrichtung hin und her. Dies bewirkt natürlich eine sehr starke Beanspruchung des Materials der Membran 4, wodurch leicht Risse und Brüche an den Biegestellen entstehen können. Durch die Anordnung der Stege 12 haben diese eine Art Regenschirmfunktion, so daß eine Belastung der Membran durch die vorgegebene Bewegung verringert wird, die Steifigkeit wird reduziert, ohne dabei die mechanische Belastbarkeit zu reduzieren.

Des weiteren ist an der Übergangsstelle zwischen Befestigungsrand 16, 17 beziehungsweise des Randstückes 200 der Membran 4 mit dem Membranträger 1 und den Stegen 12 ein Gelenk 14 vorgesehen, das die Bewegung der Membran 4 in beide Richtungen (bezogen auf den Membranträger) erlaubt. Als Gelenk 14 eignet sich in diesem Ausführungsbeispiel z. B. ein Filmschanier, das hoch belastbar ist.

In einer weiteren Ausführung der Membran 4 sind jeweils an beiden Stirnseiten der Stege 12 Gelenke 14, 14' vorgesehen, was zum einen eine höhere Beweglichkeit der Membran ermöglicht und zum anderen die jeweilige Belastung auf das einzelene Gelenk abzusenken vermag, woduch eine höhere Standfestigkeit und geringe Ausfallwahrscheinlichkeit erreicht wird. Das Scharnier 14' ist dabei bezogen auf das Randstück 200 am Steg 12 innen angeordnet.

Durch eine Faserverstärkung (Faser 15) wird das Material der Membran 4 in diesem Bereich verstärkt. Als Fasern eignen sich insbesondere Nylon-, Kunststoff-, Glas-, Metall- oder Kohlefasern. Die Membran 4 selbst besteht aus einem elastischen Material, wie Polypropylen, EPDM-Gummi, elastomeren oder thermoplastischen Werkstoffen.

Wie insbesondere aus der Figur 5 zu erkennen ist, weisen die Stege 12 eine veränderliche Höhe D, d auf. Zum Befestigungsrand 9, 10 hin sind sie höher ausgestaltet als in der entgegengesetzten Richtung. Die Stege 12 mit veränderlicher Höhe D, d legen sich bei der Bewegung im Volumen an die benachbarten Teile an, wobei die Gelenkfunktion im Bereich, in welchen die Membran 4 am Membranträger 1 angeklebt oder eingespannt ist, entlastet wird, da weniger Kräfte (Scherkräfte) auf das Gelenk 14 wirken. Das Prinzip ist ähnlich wie bei einer Leiter, da die Leiter nur an zwei Punkten (oben und unten) aufliegt und nur allein über die Reibung hält. Konstruktiv bedeutet dies, daß der Bereich der Stege 12 so ausgebildet ist, daß diese im Kammervolumen bei seiner Bewegung jeweils an zwei Punkten aufliegen, wobei ein Punkt von dem Gelenk 14 gebildet ist.

Insbesondere ist zu beachten, daß die Oberfläche 202 des Steges 12 die Verlängerung der Anlagefläche 201 des Randstückes 200 nicht berührt beziehungsweise hiervon einen gewissen Abstand aufweist. In Richtung weg vom Randstück 200 wird der Abstand zwischen der Oberfläche 202 und der gedachten, durch die Anlagefläche 201 definierten Ebene immer größer, wodurch eine beachtliche Kapazitätserweiterung (durch volumenvergrößerung) durch solche Ausgestaltungen der erfindungsgemäßen Membranfilterelemente beziehungsweise Filterpressen erreicht wird. An der Anlagefläche 201 liegt die Membran an dem Membranträger und/oder an benachbarten Membranfilterelementen an.

Bei großflächigen Membranen 4 ist es vorteilhaft, sogenannte Stütznocken 18 vorzusehen. Ihre Höhe entspricht der des Befestigungsrandes 16, 17 der Membran 4. Auch hier ist es vorteilhaft Stege 19 radial um die Stütznocke 18 herum anzuordnen. Es erleichtert auch hier den besseren Abfluß der Flüssigkeit.

Die Stege 19, die den Stütznocken 18 z. B. sternförmig umgeben, sind hierbei im wesentlichen tropfenförmig, radial nach außen sich ausweitend ausgebildet. Die dazwischenliegenden Kanäle sind konisch ausgebildet.

Zum Randbereich der Membran zählt im Sinne der Erfindung auch der Bereich um den Stütznocken 18. Auch hier ist die Membran 4 in ihrer Bewegung senkrecht zur Fläche durch die Festlegung an den Stütznocken eingeschränkt und bietet einen Randbereich im Sinne der Erfindung, der durch die Anordnung der Stege in ihrer Beweglichkeit deutlich erhöht wird.

Die in den abhängigen Ansprüchen angeführten Rückbeziehungen weisen auf die weitere Ausbildung des Gegenstandes des Hauptanspruches durch die Merkmale des jeweiligen Unteranspruches hin.

## Patentansprüche

1. Membranfilterelement (20) bestehend aus einem Membranträger (1) mit Zulauf (3), wenigstens einer daran angeordneten Membran (4), die mit einem Filter zusammenwirkt, wobei mindestens auf der dem Membranträger (1) abgewandten Seite der Membran (4) Noppen (11, 13) und Stege (12, 19) vorgesehen sind, an welchen eine Flüssigkeit ablaufen kann, wobei die Flüssigkeit über Leitungen im Membranträger (1) und Kanäle (6) abgeführt wird, und die Stege (12) im Randbereich (9, 10) mindestens teilweise in Fließrichtung oder sternförmig angeordnet sind, wobei der Membranträger (1) einen Befestigungsrand (16) und einen Umfang (17) aufweist, an welchen die Membran (4) befestigt ist, und eine Öffnung oder Stütznocke (18) vorgesehen ist und die Stege (12, 19) eine veränderliche Höhe (D, d) aufweisen, wobei die Höhe zu dem Befestigungsrand (16) bzw. der Öffnung oder Stütznocke (18) oder dem Zulauf (3) hin zunimmt und die Stege (12) derart angeordnet sind, daß diese bei einer Bewegung der Membran (4) auf den Membranträger (1) oder einer benachbarten Membran (4) zu sich leiterartig an diese anlehnen und die Stege im Randbereich (9) der Membran (4) bezüglich des Zulaufs (3) radial und bezüglich des Randbereiches (10) rechtwinklig angeordnet sind.

2. Membranfilterelement nach Anspruch 1, **dadurch gekennzeichnet, daß** in dem Randbereich (9) die Stege (12, 19) radial zur Öffnung oder zur Stütznocke (18) angeordnet sind.

3. Membranfilterelement nach einem oder mehreren der vorhergehenden Ansprüche, **dadurch gekennzeichnet, daß** auch die dem Membranträger (1) zugewandten Seiten der Membran (4) zumindest im Randbereich (9, 10) mindestens teilweise in Fließrichtung orientierte Stege aufweisen.

4. Membranfilterelement nach einem oder mehreren der vorhergehenden Ansprüche, **dadurch gekennzeichnete, daß** die Membran (4) an ihrem Rand ein Randstück (200) aufweist, und das Randstück (200) Anlageflächen aufweist, an welchen es am Membranträger (1) anliegt.

5. Membranfilterelement nach einem oder mehreren der vorhergehenden Ansprüche, **dadurch gekennzeichnet**e, daß das Randstück (200) einstückig mit der Membran (4) ausgebildet ist.

6. Membranfilterelement nach einem oder mehreren der vorhergehenden Ansprüche, **dadurch gekennzeichnet**e, daß in unbelasteter Normalstellung der Membran (4 ) die Oberfläche (202) des Steges (12) bezüglich der Anlagefläche (201) in Richtung der Membran (4) zurückgesetzt ist oder mit dieser Anlagefläche (201) nicht fluchtet.

7. Membranfilterelement nach einem oder mehreren der vorhergehenden Ansprüche, **dadurch gekennzeichnet**e, daß die Membran (4) aus einem elastischen Material besteht, wobei insbesondere vorgesehen ist, daß die Membran (4) aus Polypropylen, EPDM - Gummi, elastomerern oder thermoplastischen Werkstoffen besteht.

8. Membranfilterelement nach einem oder mehereren der vorhergehendene Ansprüche, **dadurch gekennzeichnet, daß** im Randbereich (9, 10), insbesondere zwischen dem Randstück (200), beziehungsweise dem Befestigungsbereich (16, 17) und dem Steg ein Gelenk (14) für eine Bewegung der Membran (4) in Richtung auf den Membranträger (1) zu oder hiervon weg vorgesehen ist

9. Membranfilterelement nach einem oder mehereren der vorhergehendene Ansprüche, **dadurch gekennzeichnet, daß** die Membran (4) zumindest im Bereich des Gelenkes (14) faserverstärkt ist, wobei insbesondere zur Faserverstärkung Nylon-, Kunststoff-, Glas-, Metall- oder Kohlefasern Verwendung finden.

10. Filterpresse zum Auspressen bzw. Filtern von mit Feststoffen versetzten Flüssigkeiten, bestehend aus wenigstens zwei benachbart angeordneten Membranfilterelementen nach einem oder mehreren der vorhergehenden Ansprüche oder einem Membranfilterelement nach einem oder mehreren der vorhergehenden Ansprüche und einem benachbarten Kammerelement, die jeweils zwischen sich eine Filterkammer (2) bilden, in die über einen Zulauf (3) das zu filternde Medium einbringbar ist, wobei zwischen Membran (4) und Filtermedium ein Filter (7) vorgesehen ist, zum Durchpressen des Filtermediums unter Bildung eines Filterkuchens (8) und eines Filtrats (5), wobei das Filtrat (5) zwischen den Noppen (11, 13) und Stegen (12), die auf der Oberfläche der Membran (4) angeordnet sind, abfließt und wobei insbesondere der Raum zwischen Membranträger (1) und Membran (4) mit Druck beaufschlagbar ist, der die Membran (4) gegen das Filtermedium bzw. den durch das Filtern entstandenen Filterkuchen (8) presst.

## Claims

1. Membrane filter element (20) comprising a membrane carrier (1) with inlet (3), at least one membrane (4) arranged at it interacting with a filter, wherein at least at the side of the membrane (4) opposite the membrane carrier (1) naps (11, 13) and webs (12, 19) are provided off which a liquid can drain, the liquid being removed via lines in the membrane carrier (1) and channels (6), and the webs (12) in the edge region (9, 10) are arranged at least partly in the direction of flow or star-shaped, wherein the membrane carrier (1) has a fastening edge (16) and a circumference (17) to which the membrane (4) is attached, and an opening or supporting cam (18) is provided, and the webs (12, 19) have a variable height (D, d), the height increasing towards the fastening edge (16) or the opening or the supporting cam (18) or the inlet (3) and the webs (12) are arranged in such a way that they, when the membrane (4) moves towards the membrane carrier (1) or an adjoining membrane (4) lean on these like a ladder and that the webs (12) are arranged in the edge region (9) of the membrane (4) with regard to the inlet (3) radially, and/or with regard to the edge region (10) rectangularly.

2. Membrane filter element according to claim 1, **characterised in that** in the edge region (9) the webs (12, 19) are arranged radially to the inlet (3) or the opening or the supporting cam (18).

3. Membrane filter element according to one or more of the preceding claims, **characterised in that** also the sides of the membrane (4) facing the membrane carrier (1) have at least in the edge region (9, 10) webs orientated at least partly in the direction of flow.

4. Membrane filter element according to one or more of the preceding claims, **characterised in that** the membrane (4) has at its edge an edge member (200), and the edge member (200) has contact surfaces with which it is in contact to the membrane carrier (1).

5. Membrane filter element according to one or more of the preceding claims, **characterised in that** the edge member (200) is designed in one piece with the membrane (4).

6. Membrane filter element according to one or more of the preceding claims, **characterised in that** in unstressed normal position of the membrane (4) the surface (202) of the web (12) is set back with regard to the contact surface (201) in the direction of the membrane (4), or is not in alignment with this contact surface (201).

7. Membrane filter element according to one or more of the preceding **characterised in that** the membrane (4) consists of elastic material, wherein it is in particular provided that the membrane (4) consists of polypropylene, EDPM rubber, elastomere or thermoplastic materials.

8. Membrane filter element according to one or more of the preceding claims, **characterised in that** in the edge region (9, 10), in particular between the edge member (200) or the fastening region (16, 17), and the web a joint (14) is provided for a movement of the membrane (4) in the direction to the membrane carrier (1), either towards or away from it.

9. Membrane filter element according to one or more of the preceding claims, **characterised in that** the membrane (4) is fiber reinforced at least in the region of the joint (14), wherein in particular for fiber reinforcing nylon, synthetic, glass, metal, or carbon fibers are used.

10. Filter press for pressing or filtering liquids containing solid materials, comprising at least two adjoining arranged membrane filter elements according to one or more of the preceding claims, or a membrane filter element according to one or more of the preceding claims, and an adjoining chamber element which each form between them the filter chamber (2) into which the medium via an inlet (3) can be introduced, wherein between membrane (4) and filter medium a filter (7) is provided, for pressing through the filter medium and a filter cake (8) and a filtrate (5) is formed, wherein the filtrate (5) is drained off between the naps (11, 13) and webs (12) arranged on the surface of the membrane (4), and wherein in particular the space between the membrane carrier (1) and the membrane (4) can be pressurised, the pressure pressing the membrane (4) against the filter medium or the filter cake (8) formed by filtering.

## Revendications

1. Elément de filtre à membrane (20) comportant un support de membrane (1) incluant une arrivée de fluide (3), au moins une membrane (4) et un filtre, la membrane (4) comportant au moins sur sa face la plus éloignée du support des plots (11, 13) et des traverses (12, 19), à l'aide desquelles un liquide peut s'écouler en empruntant des canaux (6) et des conduits situés à l'intérieur du support de membrane (1), les traverses (12) rayonnant dans la zone de bord au moins partiellement en forme d'étoile ou en direction d'écoulement, avec le support de membrane (1) possédant une circonférence (17) et un bord de fixation (16) sur lesquels la membrane (4) est fixée, et avec une ouverture située au niveau du bord de support (18) et avec les traverses (12, 19) possédant des hauteurs inégales (D, d) avec une hauteur maximale située proche du rebord de fixation (16), proche de l'ouverture du bord de support (18) et proche de l'arrivée d'un liquide et avec les traverses (12) étant placées de façon à ce qu'elles reposent par leurs extrémités, telle une échelle, lors d'un mouvement de la membrane (4) contre le support (1) ou contre une membrane voisine (4) et les traverses (12) étant orientées à proximité du bord (9) de la membrane (4) selon une symétrie radiaire par rapport au bord de l'arrivée du fluide (3) et/ou perpendiculairement à la zone du bord (10).

2. Elément de filtre à membrane selon la revendication 1, **caractérisé en ce que** les traverses (12, 19) sont orientées à proximité du bord (9) selon une symétrie radiaire par rapport à l'arrivée du fluide (3) ou à l'ouverture située au niveau du rebord de support (18).

3. Elément de filtre à membrane selon une ou plusieurs des revendications précédentes, **caractérisé en ce que** la surface de la membrane (4) faisant face au support (1) possède également et au moins à proximité du bord (9, 10) des traverses orientées au moins partiellement selon la direction de l'écoulement.

4. Elément de filtre à membrane selon une ou plusieurs des revendications précédentes, **caractérisé en ce que** l'extrémité de la membrane (4) possède une bordure (200) avec des faces d'appui formant le contact avec le support (1) de la membrane.

5. Elément de filtre membrane selon une ou plusieurs des revendications précédentes, **caractérisé en ce que** la bordure (200) forme une seule pièce avec la membrane (4).

6. Elément de filtre à membrane selon une ou plusieurs des revendications précédentes, **caractérisé en ce que**, en position normale de repos de la membrane (4), la distance entre la surface (202) de la traverse (12) et la membrane (4) est plus petite que celle entre la membrane et la surface d'appui (201).

7. Elément de filtre à membrane selon une ou plusieurs des revendications précédentes, **caractérisé en ce que** la membrane (4) est fabriquée dans un matériau élastique comme du polypropylène, du caoutchouc EPDM, des élastomères ou des matériaux thermoplastiques.

8. Elément de filtre à membrane selon une ou plusieurs des revendications précédentes, **caractérisé en ce qu'**il existe une articulation (14) située en particulier entre la bordure (200) ou la zone de fixation (16, 17) et la traverse, autorisant un mouvement d'approchement ou d'éloignement de la membrane (4) par rapport à son support (1).

9. Elément de filtre à membrane selon une ou plusieurs des revendications précédentes, **caractérisé en ce que** la membrane (4) est renforcée par des fibres au moins dans la zone proche de l'articulation (14), les fibres pouvant être des fibres de nylon, de plastique, de verre, de métal ou de carbone.

10. Pressoir à filtre utilisé pour presser ou filtrer des liquides contenant des substances solides, comportant au moins deux éléments de filtre à membrane selon une ou plusieurs des revendications précédentes ou comportant un élément de filtre à membrane selon une ou plusieurs des revendications précédentes et une chambre voisine, incluant dans les deux cas une chambre (2) qui reçoit le médium à filtrer via l'arrivée (3) de façon à ce qu'un filtre (7) soit situé entre le médium à filtrer et la membrane (4) afin de le fractionner par la pression exercée en un résidu solide (8) et en un filtrat (5) qui s'écoule entre les plots (11, 13) et les traverses (12) situés sur la surface de la membrane (4) en utilisant la possibilité de mettre l'espace entre la membrane (4) et son support (1) sous pression, plaquant ainsi la membrane (4) contre le médium à filtrer, voire au fur et à mesure contre le résidu (8).
